# EUROPÄISCHE PATENTSCHRIFT

(11) **EP 3 507 873 B1**
(45) Veröffentlichungstag und Bekanntmachung des Hinweises auf die Patenterteilung: **19.05.2021**
(21) Anmeldenummer: 17729843.7
(22) Anmeldetag: 07.06.2017
(51) Int. Cl.: H01T 4/04, H01T 4/12

(54) **GASABLEITER**
GAS ARRESTER
ÉCLATEUR À GAZ

(30) Priorität: 30.08.2016 DE 102016116148
(43) Veröffentlichungstag der Anmeldung: 10.07.2019
(73) Patentinhaber: TDK Electronics AG, 81671 München (DE)
(72) Erfinder: HOFFMANN, Robert, 12163 Berlin (DE)
(74) Vertreter: Epping - Hermann - Fischer
(86) Internationale Anmeldenummer: PCT/EP2017/063840
(87) Internationale Veröffentlichungsnummer: WO 2018/041430

(56) Entgegenhaltungen:
- JP-A- 2013 105 624
- US-A1- 2004 125 530
- US-A1- 2009 154 052

## Beschreibung

Die Erfindung betrifft einen Gasableiter, insbesondere einen Gasableiter für Datenleitungssysteme. Die Erfindung betrifft ferner die Verwendung eines Gasableiters.

Der Schutz von Datenleitungen in Telekommunikationsanwendungen gegen Überspannungen und Überströme stellt eine große Herausforderung an Hersteller von Schutzbauelementen dar. Zum einen müssen die Schutzbauelemente frühzeitig die Spannung begrenzen und höhe Blitzströme tragen können. Zum anderen muss die Kapazität der Schutzbauelemente möglichst gering sein, um das übertragene Signal nicht zu beeinflussen.

In den meisten Anwendungen wird dafür ein so genannter Staffelschutz integriert. Das bedeutet, dass mehrere unterschiedliche Schutzbauelemente entkoppelt hintereinander geschaltet werden, um die Nachteile des einen durch die Vorteile des anderen auszugleichen. Die daraus resultierende Baugruppe zum Schutz vor Überspannungen und Überströmen ist dann aufwändig und sehr voluminös.

Ferner besitzen konventionelle Überspannungsschutzbauelemente in der Regel nur zwei Anschlüsse und können maximal eine Ader gegen Erde schützen. Bei Datenleitungen mit mehr als zwei Adern kommt es hierbei zwangsläufig zu großem Platzbedarf (pro Ader ein Schutzbauelement).

Bisher ist das Problem bei Datenleitungssystemen mit deutlich mehr als zwei Leitungen nicht zufriedenstellend gelöst. Es gibt zwar Ableiter mit mehr als drei von außen kontaktierbaren Elektroden. Diese können jedoch nur Spannungsdifferenzen zwischen benachbarten Leitungsadern begrenzen. Zwischen Aderpaaren kann es zu hohen Spannungsdifferenzen kommen, die die Baugruppe zerstören können.

Ein Gasableiter gemäß dem Oberbegriff des Anspruchs 1 ist aus JP 2013 105624 A bekannt.

Die vorliegende Erfindung konzentriert sich auf den Primärschutz dieser Anwendungen (hohe Blitzströme, Eingangsschutz).

Eine zu lösende Aufgabe besteht darin, einen verbesserten Gasableiter anzugeben, beispielsweise einen Gasableiter der besonders einfach, platzsparend und/oder kostengünstig ist und/oder der besonders effektiv Datenleitungssysteme mit mehr als zwei Leitungen vor Überspannungen schützt. Eine weitere Aufgabe besteht darin, die Verwendung eines verbesserten Gasableiters anzugeben.

Diese Aufgabe wird durch die Vorrichtung und die Verwendung gemäß den unabhängigen Ansprüchen 1 und 13 gelöst. Gemäß einem Aspekt wird ein Gasableiter angegeben. Der Gasableiter ist ausgebildet zum Schutz von Datenleitungssystemen vor Überspannungen und Überströmen. Insbesondere ist der Gasableiter zum Schutz von elektronischen Komponenten ausgebildet, die wenigstens zwei Datenleitungen, vorzugsweise aber deutlich mehr Datenleitungen, beispielsweise 4, 6 oder 8 Datenleitungen aufweisen. Vorzugsweise ist der Gasableiter oberflächenmontierbar ausgebildet (SMD - surface mountable device). Mit anderen Worten, der Gasableiter kann vollständig automatisiert auf der Oberfläche einer Leiterplatte montiert werden.

Der Gasableiter weist eine Ableitelektrode auf. Die Ableitelektrode ist vorzugsweise eine gemeinsame, von außen kontaktierbare Elektrode. Die Ableitelektrode liegt vorzugsweise auf Erdpotential.

Der Gasableiter weist ferner eine Vielzahl von weiteren Einzelelektroden auf. Die Einzelelektroden können alle unabhängig voneinander kontaktiert werden. Die Einzelelektroden können eckig, beispielsweise rechteckig, oder rund, beispielsweise zylinderförmig, ausgebildet sein. Auch eine Mischung aus beiden Formgebungen ist vorstellbar.

Die Einzelelektroden sind zum Anschluss an Datenleitungen ausgebildet und angeordnet. Beispielsweise weist der Gasableiter vier, fünf, sechs, sieben oder acht Einzelelektroden auf. Selbstverständlich ist auch eine geringere Anzahl von Einzelelektroden, beispielsweise zwei oder drei Einzelelektroden, oder eine größere Anzahl von Einzelelektroden, beispielsweise zehn Einzelelektroden, vorstellbar. Mit anderen Worten die Anzahl der Einzelelektroden ist skalierbar.

Durch die große Anzahl an Einzelelektroden kann eine Vielzahl von Adern oder Aderpaaren des Datenleitungssystems gegen Erde geschützt werden. Je eine Einzelelektrode ist dabei für jeden Leiter eines Paares vorgesehen. Die Ableitelektrode liegt auf Masse. Damit können Datenleitungssysteme mit >> 2 Leitungen wirksam für Überspannungen geschützt werden.

Der Gasableiter weist ferner einen gemeinsamen Gasentladungsbereich auf. Insbesondere ist ein gemeinsamer Gasentladungsbereich zwischen den Einzelelektroden und der Ableitelektrode ausgebildet. Mit anderen Worten, eine Vielzahl von separierten, jeweils zwischen einer Einzelelektrode und der Ableitelektrode ausgebildeten Gasentladungsbereichen, wird vermieden. Vielmehr gibt es einen gemeinsamen Bereich zu Gasentladung.

Auf diese Weise wird sichergestellt, dass beim Zünden einer Strecke (Bogenentladung zwischen einer Einzelelektrode und der Ableitelektrode) schnell Ladungsträger emittiert werden, die zur Zündung der jeweils benachbarten Strecke und schließlich zur vollständigen Zündung führen. Damit können wirkungsvoll Spannungsdifferenzen zwischen Adern oder Aderpaaren, die zur Zerstörung der Baugruppe führen können, vermieden werden. Somit wird ein besonders effektiver Gasableiter zum Schutz von Datenleitungssystem bereitgestellt. Ferner ist der Gasableiter auch sehr kompakt. Damit kann Platz auf der Leiterplatte / Platine gespart werden. Auf diese Weise können sehr kostengünstige Leiterplatten gebaut werden.

Gemäß einem Ausführungsbeispiel weist der Gasableiter einen keramischen Körper auf. Der keramische Körper kann eckig, beispielsweise rechteckig, oder rund, beispielsweise zylinderförmig, ausgebildet sind. Der keramische Körper weist beispielsweise Al₂O₃ auf. Die Einzelelektroden sind zumindest teilweise in den keramischen Körper eingebracht. Beispielsweise weisen die Einzelelektroden einen zylinderförmigen oder rechteckigen Teilbereich auf. Dieser Teilbereich ist vorzugsweise von dem keramischen Körper zumindest teilweise umgeben. Der keramische Körper ist zur elektrischen Trennung der Einzelelektroden ausgebildet. Damit wird sichergestellt, dass keine elektrisch leitende Verbindung zwischen den Einzelelektroden ausgebildet werden kann. Somit wird ein besonders zuverlässiger Gasableiter bereitgestellt.

Gemäß einem Ausführungsbeispiel ist die Ableitelektrode gasdicht mit dem keramischen Körper verbunden. Beispielsweise sind Ableitelektrode und keramischer Körper miteinander verlötet, beispielsweise mittels Hartlötung. Der keramische Körper ist zumindest teilweise zwischen der Ableitelektrode und den Einzelelektroden angeordnet. Dies dient der elektrischen Trennung von Ableitelektrode und Einzelelektroden. Insbesondere kann dadurch ein direkter elektrischer Kontakt zwischen den Einzelelektroden und der Ableitelektrode vermieden werden. Vielmehr entsteht eine elektrisch leitende Verbindung zwischen Einzelelektrode und Ableitelektrode lediglich im Rahmen einer Bogenentladung im Fall einer Überspannung.

Gemäß einem Ausführungsbeispiel weist der keramische Körper eine Metallisierung auf. Vorzugsweise ist die Metallisierung zumindest teilweise auf einer Außenfläche des keramischen Körpers angeordnet, welche den Einzelelektroden zugewandt ist, beispielsweise einer Stirnfläche des keramischen Körpers. Vorzugsweise ist die Metallisierung zumindest teilweise auf einer Außenfläche des keramischen Körpers angeordnet, welche der Ableitelektrode zugewandt ist, beispielsweise einer weiteren Stirnfläche des keramischen Körpers. Die Einzelelektroden sind über die Metallisierung gasdicht mit dem keramischen Körper verbunden. Vorzugsweise sind die Einzelelektroden mit dem keramischen Körper, insbesondere des Metallisierung verlötet, beispielsweise mittels Hartlötung. Gleiches gilt für die Ableitelektrode.

Vorzugsweise ist die Metallisierung derart ausgebildet, dass eine elektrisch leitende Verbindung zwischen den Einzelelektroden vermieden wird. Insbesondere kann die Metallisierung auch nur in Teilbereichen der Stirnfläche des keramischen Körpers ausgebildet sein, welche den Einzelelektroden zugewandt ist.

Gemäß einem Ausführungsbeispiel weist der keramische Körper eine Vielzahl von Kammern auf. Vorzugsweise entspricht eine Anzahl der Kammern einer Anzahl von Einzelelektroden. Beispielsweise weist der keramische Körper vier oder acht Kammer auf. Die Kammern sind als Durchbrüche ausgebildet. Mit anderen Worten, die Kammern durchdringen den keramischen Körper, beispielsweise in einer horizontalen Richtung, vollständig. Die Kammern sind zur zumindest teilweisen Aufnahme der Einzelelektroden ausgebildet. Auf diese Weise werden die Einzelelektroden effektiv räumlich voneinander separiert. Die Ausbildung einer leitfähigen Verbindung zwischen den Einzelelektroden wird wirksam unterbunden.

Gemäß einem Ausführungsbeispiel sind die Kammern mit einem Gas, beispielsweise einem Edelgas, gefüllt. Beispielsweise sind die Kammern Teil des gemeinsamen Gasentladungsbereichs des Gasableiters. Die Kammern sind jeweils durch einen Trennsteg voneinander separiert. Der Trennsteg ist Teil des keramischen Körpers. Insbesondere weist der Trennsteg keramisches Material auf.

Der jeweilige Trennsteg weist einen Einschnitt oder eine Einkerbung auf. Der Einschnitt kann beispielsweise durch Ausfräsen des Trennstegs gebildet werden. Der Einschnitt kann eine runde oder eine eckige Form aufweisen. Der jeweilige Einschnitt erstreckt sich in horizontaler Richtung über die gesamte Ausdehnung des Trennstegs hinweg. Der jeweilige Einschnitt ist dazu ausgebildet und angeordnet, einen Gasaustausch zwischen den Kammern zu ermöglichen. Damit wird auf einfache und wirksame Weise ein gemeinsamer Gasentladungsbereich zwischen den Einzelelektroden und der Ableitelektrode zur Verfügung gestellt.

Gemäß einem weiteren Aspekt wird die Verwendung eines Gasableiters angegeben. Insbesondere wird die Verwendung des oben beschriebenen Gasableiters angegeben. Sämtliche Merkmale, die in Verbindung mit dem Gasableiter beschrieben wurden, finden auch bei der Verwendung des Gasableiters Anwendung und umgekehrt. Es wird dabei die Verwendung des Gasableiters beschrieben, wobei der Gasableiter zum Abbau von Spannungsdifferenzen zwischen Adern- oder Aderpaaren von Datenleitungssystemen mit >> 2 Leitungen eingesetzt wird. Durch die Vielzahl von Einzelelektroden und dem gemeinsamen Gasentladungsbereich können Spannungsdifferenzen zwischen den Adern / Aderpaaren wirkungsvoll vermieden werden. Dabei eignet sich die Ausgestaltung, insbesondere eine Form und Größe des Gasableiters, besonders gut für dessen Einsatz zum Schutz von Ethernetports.

Die Erfindung wird im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.
- Figur 1a: zeigt einen Ableiter zum Schutz vor Überspannungen gemäß dem Stand der Technik,
- Figur 1b: zeigt einen Ableiter zum Schutz vor Überspannungen gemäß dem Stand der Technik,
- Figur 2: zeigt ein Schaltbild für ein Staffelschutzkonzept zum Schutz von Datenleitungen in Telekommunikationsanwendungen gemäß dem Stand der Technik,
- Figur 3: zeigt ein Schaltbild einer Schutzbeschaltung für einen Ethernetport gemäß dem Stand der Technik,
- Figur 4: zeigt ein Schaltbild einer Schutzbeschaltung für einen Ethernetport gemäß dem Stand der Technik,
- Figur 5: zeigt eine Explosionsdarstellung eines Gasableiters für Datenleitungssysteme,
- Figur 6: zeigt eine Schnittansicht eines Gasableiters für Datenleitungssysteme, der nicht Gegenstand der Erfindung ist.

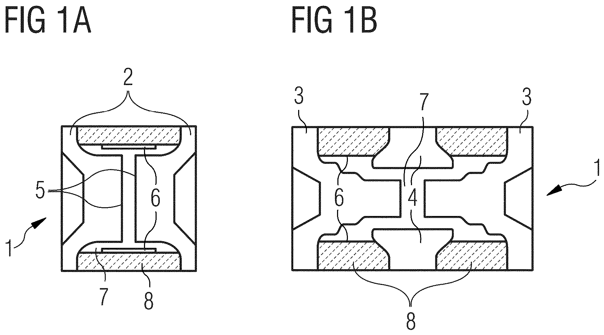

Die Figuren 1a und 1b zeigen herkömmliche Ableiter 1 zum Schutz vor Überspannungen. Es gibt grundsätzlich zwei Arten von gasgefüllten Ableitern 1: Zwei-Elektroden-Ableiter (Figur 1a) sowie Drei-Elektroden-Ableiter (Figur 1b). Der in Figur 1a gezeigte Zwei-Elektroden-Ableiter 1 weist eine erste Elektrode und eine zweite Elektrode 2 sowie einen Keramikkörper 8 zur Isolierung auf. Der Ableiter 1 weist einen Entladungsbereich 7 zur Ermöglichung einer elektrischen Entladung zwischen den Elektroden 2 bei einer Überspannung auf. Bei einer Überspannung soll somit im Entladungsbereich 7 eine Entladung, insbesondere eine Lichtbogenentladung, zwischen den Elektroden 2 stattfinden. Der Entladungsbereich 7 kann mit einem Gas, insbesondere einem Edelgas, gefüllt sein.

Im Entladungsbereich 7 ist an einer Innenseite des Keramikkörpers 8 eine Zündungshilfe 6 (beispielsweise aus Graphit) vorgesehen, welche beim Ansprechen des Ableiters 1 den Aufbau einer Entladung unterstützt. Im Entladungsbereich 7 ist ferner ein Aktivierungsmaterial 5, beispielsweise Silikate oder Alkalimetalle, angeordnet. Durch das Aktivierungsmaterial 5 kann die Ausbildung eines Lichtbogens unterstützt werden.

Der in Figur 1b gezeigte gasgefüllte Drei-Elektroden-Ableiter 1 weist im Gegensatz zu dem Ableiter 1 aus Figur 1a eine erste Außenelektrode 3, eine zweite Außenelektrode 3 und eine zentrale Elektrode 4 auf, die gemeinsam den Entladungsraum 7 begrenzen.

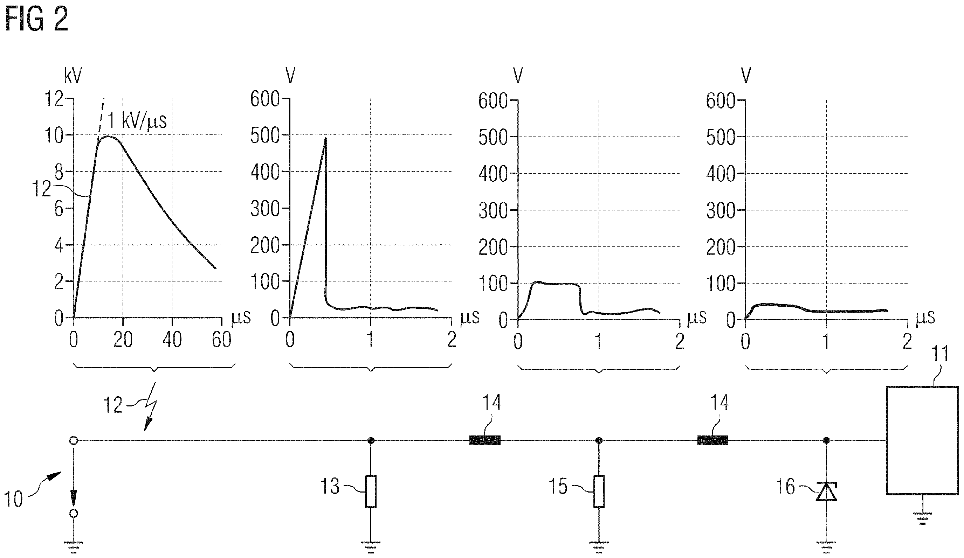

Zum Schutz von Datenleitungen in Telekommunikationsanwendungen gegen Überspannungen und Überströme wird oftmals ein so genannter Staffelschutz integriert (siehe Figur 2). Das bedeutet dass mehrere unterschiedliche Schutzbauelemente / Komponenten (Ableiter, Dioden) entkoppelt, hintereinander geschaltet werden um die Nachteile des einen durch die Vorteile des anderen auszugleichen. In Figur 2 oben ist der Spannungsverlauf abgegriffen an den verschiedenen elektronischen Komponenten dargestellt, während Figur 2 unten das Schaltbild 10 mit den elektronische Komponenten für das Staffelschutzkonzept darstellt.

Bei dem Staffelschutzkonzept finden ein Ableiter 13, ein Varistor 15 sowie eine Unterdrückerdiode 16 Anwendung, um ein elektronisches Gerät 11 vor einem Spannungsstoß 12 zu schützen. Zwischen den einzelnen Komponenten 13, 15, 16 ist jeweils ein Entkoppler 14, beispielsweise eine Spule oder ein Widerstand, zur Entkopplung der einzelnen Komponenten 13, 15, 16 geschaltet, damit der langsame Ableiter 13 vor dem schnelleren Varistor 15 oder noch schnelleren Dioden 16 zünden können.

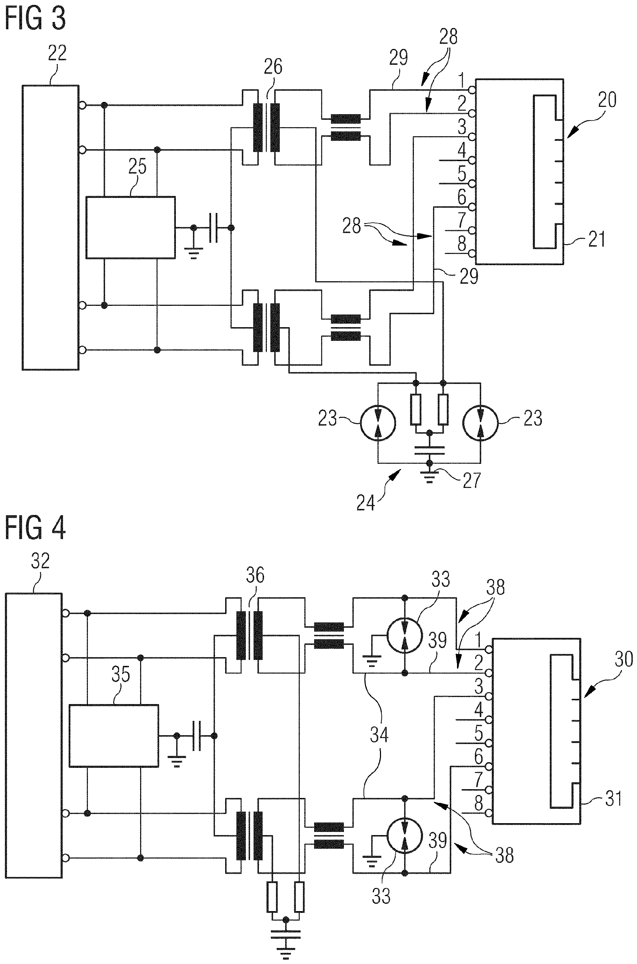

Im Datenleitungsbereich wird in der Regel eine Kombination aus Gasableiter als Primärschutz und Unterdrückerdiode als Sekundärschutz eingesetzt. Figur 3 zeigt ein Schaltbild 20 für eine mögliche Schutzbeschaltung für einen Ethernetport 21 (100Mbit, mit zwei Aderpaaren 28). Dargestellt ist die Verbindung zwischen Ethernetport 21 und LAN Chip 22 über Adern / Leiter 29.

Der Sekundärschutz 25 (z.B. ein Array aus Dioden) ist durch einen Transformator 26 vom Primärschutz 24 entkoppelt. Der Primärschutz 24 ist hier an einem Mittabgriff des Transformators 26 gegen Erde 27 geschaltet, so dass eine Überspannung von der Datenleitung zwischen Leitung und Erde 27 über den Ableiter 23 kurzgeschlossen werden kann. Etwaige Restspitzen passieren gedrosselt den Transformator 26, werden dann jedoch vom Sekundärschutz 25 absorbiert.

Ein Nachteil dieser Schaltung ist, dass wenn einer der Ableiter 23 zündet, der gesamte Blitzstrom über einen Teil der Tranformatordrossel zur Erde fließt. Die dabei übertragenen Spannungen können über die Belastungsfähigkeit des Sekundärschutzes 25 hinausgehen.

Um dieses Problem zu lösen, kann der Primärschutz auch an anderer Stelle integriert werden, wie in dem Schaltbild 30 gemäß Figur 4 dargestellt ist. Dargestellt ist die Verbindung zwischen Ethernetport 31 und LAN Chip 32 über Adern / Leiter 39.

In einem Überspannungfall fließt der Blitzstrom nun nicht mehr über die Transformatorwicklung 36. Damit kann der Sekundärschutz 35 vor übermäßiger Belastung geschützt werden. Als zusätzlichen Vorteil hat diese Schaltung auch, dass Überspannungen zwischen den Leitern 39 eines einzelnen Aderpaares 38 durch den einsetzten Gasableiter 33 (Primärschutz 34) begrenzt werden können.

Ein gemeinsamer Nachteil mit der ersten Schaltung 20 liegt darin, dass es zu hohen Potenzialunterschieden zwischen Aderpaaren 38 kommen kann, wenn einer der Ableiter 33 zündet. In der Regel werden bei diesen Belastungen die einzelnen Adern / Leiter 39 extern mit Widerständen symmetriert. Eine der vier Strecken (Leiter 39, hier dargestellt durch die Ziffern 1,2,3 oder 6 am Ethernetport 31) zur Erde wird zuerst zünden. Der am selben Ableiter 33 angeschlossene Leiter 39 wird aufgrund des gemeinsamen Gasraumes in diesem 3-Elektroden Ableiter 33 ebenfalls zünden und die Spannungsdifferenz im µs-Bereich auf nahezu 0 V begrenzen.

Konventionelle Überspannungssschutzbauelemente besitzen in der Regel zwei Anschlüsse, (maximal drei Anschlüsse bei einem 3-Elektroden Ableiter). Daher können diese maximal zwei Adern gegen Erde schützen. Eine Elektrode liegt dabei auf Masse, je eine weitere Elektrode ist für jeden Leiter / jede Ader des Leiterpaares / Aderpaares vorgesehen. Bei Datenleitungen mit >> zwei Adern kommt es dabei zwangsläufig zu großen Spannungsdifferenzen zwischen Adern oder Aderpaaren, die zu der Zerstörung der Baugruppe führen können.

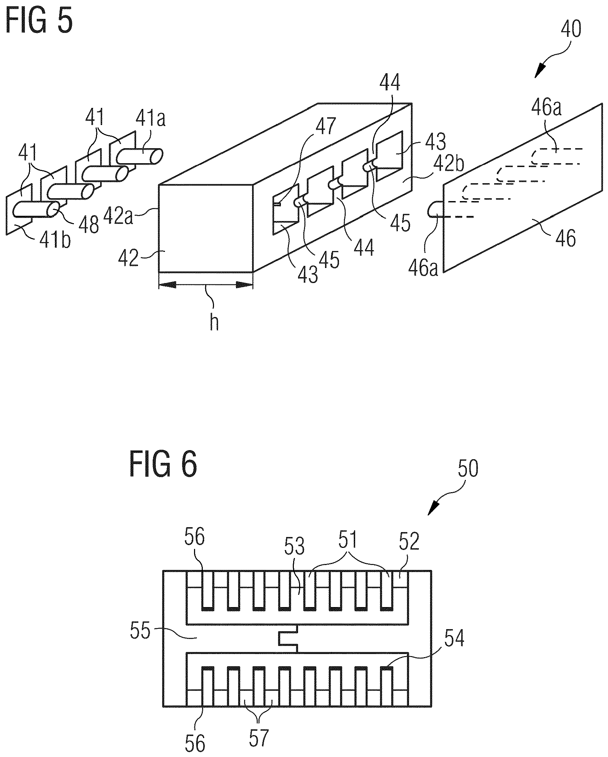

Die Figuren 5 und 6 zeigen Gasableiter für Datenleitungssysteme mit >> 2 Leitungen, die wirkungsvoll Spannungsdifferenzen zwischen Adern oder Aderpaaren, die zu der Zerstörung der Baugruppe führen können, vermeiden.

Die Figur 5 zeigt insbesondere eine Vorrichtung 40 zum Ableiten von Überspannungen (Gasableiter 40) mit fünf Elektroden 41, 46. Der Gasableiter 40 ist damit für ein Datenübertragungssystem mit vier Leitern bzw. Adern, beispielsweise einem 100 Mbit Ethernet, ausgebildet. Selbstverständlich kann der Gasableiter 40 auch weniger als fünf Elektroden, beispielsweise vier Elektroden oder mehr als fünf Elektroden, beispielsweise sechs, sieben, acht oder mehr Elektroden aufweisen.

Der Gasableiter 40 weist vier Einzelelektroden 41 auf (siehe linke Seite in Figur 5). Bei einem Gasableiter 40 mit weniger oder mehr Elektroden ist die Zahl der Einzelelektroden 41 entsprechend angepasst. Folglich kann der Gasableiter 40 auch drei Einzelelektroden 41 oder mehr als vier Einzelelektroden 41, beispielsweise fünf, sechs oder mehr Einzelelektroden 41 aufweisen. Die Einzelelektroden 41 sind beispielsweise kaltfließgepresst. Die Einzelelektroden 41 weisen Cu oder FeNi₄₂ auf.

Die Einzelelektroden 41 sind pinförmig oder zylinderformig ausgebildet. Die jeweilige Einzelelektrode 41 weist einen pinförmigen ersten Abschnitt 41a auf. Ein zweiter Abschnitt 41b der jeweiligen Einzelelektrode 41 ist rechteckig bzw. als quadratische Platte ausgebildet. Der zweite Abschnitt 41b kann als eine Rückwand der jeweiligen Einzelelektrode 41 angesehen werden. Die beiden Abschnitte 41a, 41b sind vorzugsweise einstückig ausgebildet.

Der Gasableiter 40 weist ferner eine Ableit- oder Außenelektrode 46 auf. Die Ableitelektrode 46 weist eine längliche Form auf. Die Ableitelektrode 46 ist beispielsweise rechteckig ausgebildet. Die Ableitelektrode 46 weist beispielsweie Kupfer (Cu) oder Eisen-Nickel (FeNi₄₂) auf. Die Ableitelektrode 46 weist Kontaktelemente 46a (in diesem Ausführungsbeispiel vier Pins in Figur 5) auf. Eine Anzahl von Kontaktelementen 46a entspricht vorzugsweise der Anzahl der Einzelelektroden 41. Die Kontaktelemente 46a ragen aus einer Oberfläche (erste bzw. innere Stirnfläche der Ableitelektrode 46) der Ableitelektrode 46 hervor. In dem fertigen Gasableiter 40 sind die Kontaktelemente 46a den Einzelelektroden 41 gegenüberliegend angeordnet.

Die Kontaktelemente 46a sind pinförmig oder zylinderförmig ausgebildet. Die Formgebung des jeweiligen Kontaktelements 46a entspricht vorzugsweise der Formgebung des ersten Abschnitts 41a der jeweiligen Einzelelektrode 41. Insbesondere weist die Ableitelektrode 46 in diesem Ausführungsbeispiel eine Formgebung wie die Einzelelektroden 41 auf, jedoch mit einer gemeinsamen Rück- bzw. Verbindungswand (zweite bzw. äußere Stirnfläche der Ableitelektrode 46).
Der Gasableiter 40 weist ferner einen keramischen Körper 42 auf. Der keramische Körper 42 weist beispielsweise eine Al₂O₃ Keramik auf. Der keramische Körper 42 dient der zumindest teilweisen Aufnahme der Einzelelektroden 41. Der keramische Körper 42 dient ferner der zumindest teilweisen Aufnahme der Ableitelektrode 46, insbesondere der Kontaktelemente 46a.

Zu diesem Zweck weist der keramische Körper 42 Kammern 43 auf. Die Anzahl der Kammern 43 entspricht der Anzahl der Einzelelektroden 41. Die Anzahl der Kammern 43 entspricht der Anzahl der Kontaktelemente 46a. In diesem Fall weist der Gasableiter 40 folglich vier Kammern 43 auf. Die jeweilige Kammer 43 durchdringt den keramischen Körper 42 vollständig. Insbesondere stellt die jeweilige Kammer 43 einen Durchbruch durch den keramischen Körper 42 in horizontaler Richtung h dar. Die jeweilige Kammer 43 erstreckt sich über eine komplette Dicke oder horizontale Ausdehnung des keramischen Körpers 42. Die jeweilige Kammer 43 ist mit einem Gas, insbesondere mit einem Edelgas, gefüllt.

Bei dem fertigen Gasableiter 40 ist der erste Abschnitt 41a der jeweiligen Einzelelektrode 41 von einer ersten Seite der jeweiligen Kammer 43 her zumindest teilweise in die Kammer 43 eingebracht. Das jeweilige Kontaktelement 46 ist von einer zweiten Seite der jeweiligen Kammer 43 her, welche der ersten Seite gegenüberliegt, zumindest teilweise in die Kammer 43 eingebracht. Das jeweilige Kontaktelement 46a und die jeweilige Einzelelektrode 41 sind damit in der jeweiligen Kammer 43 gegenüberliegend angeordnet.

Die einzelnen Kammern 43 sind jeweils durch einen Trennsteg 44 voneinander separiert. Der Trennsteg 44 ist Teil des keramischen Körpers 42. Insbesondere weist der Trennsteg 44 keramisches Material auf. Jeder Trennsteg 44 weist einen Einschnitt 45 auf. Der Einschnitt 45 ist in diesem Ausführungsbeispiel halbrund ausgebildet, z.B. eingefräst. Aber auch andere Formen, beispielsweise eine eckige Form, sind für den Einschnitt 45 vorstellbar.

Der Einschnitt 45 erstreckt sich vollständig über eine horizontale Ausdehnung (Breite) des jeweiligen Trennstegs 44. Durch die Einschnitte 45 werden die Kammern 43 miteinander verbunden. Ein Gasaustausch zwischen den einzelnen Kammern 43 ist über die Einschnitte 45 in den Trennstegen 44 weiterhin möglich. Auf diese Weise wird ein gemeinsamer Gasraum bzw. Gasentladungsbereich des Gasableiters 40 erzeugt. Beim Zünden einer der Strecken des Gasableiters 40 (Bogenentladung zwischen einer Einzelelektrode 41 und der Ableitelektrode 46), werden über diesen Weg schnell Ladungsträger in die benachbarten Kammern 43 emittiert. Dadurch kommt es zu einer vollständigen Zündung des Gasableiters 40. Große Spannungsdifferenzen zwischen einzelnen Adern oder Aderpaaren können damit vermieden werden.

Der keramische Körper 42 dient ferner der Isolierung der Einzelelektroden 41. Insbesondere wird durch den keramischen Körper 42 das Ausbilden einer elektrisch leitenden Verbindung zwischen den Einzelelektroden 41 verhindert.

Der keramische Körper 42 weist eine Metallisierung auf (nicht explizit dargestellt). Die Metallisierung ist auf einer Oberfläche, zumindest auf Teilen der Oberfläche, des keramischen Körpers 42 angeordnet. Insbesondere erstreckt sich die Metallisierung vorzugsweise über eine erste Außenfläche 42a (verdeckte linke Fläche in Figur 5) und eine zweite Außenfläche 42b (gegenüberliegende rechte Fläche in Figur 5) des keramischen Körpers 42. Die Außenflächen 42a, 42b stellen in diesem Fall die Stirnflächen des keramischen Körpers 42 dar. Die Außenflächen 42a, 42b bzw. Stirnflächen sind den Elektroden 41, 46 zugewandt. Die erste Außen- bzw. Stirnfläche 42a ist den Einzelelektroden 41 zugewandt. Die zweite Außen- bzw. Stirnfläche 42b ist der Ableitelektrode 46, insbesondere der inneren Stirnfläche der Ableitelektrode 46, zugewandt.

Die Stirnflächen 42a, 42b des keramischen Körpers 42 sind metallisiert. Die Stirnflächen 42a, 42b sind ferner vernickelt. Auf der ersten Stirnfläche 42a ist die Metallisierung derart ausgeführt, dass es zu keiner leitfähigen Verbindung zwischen den Einzelelektroden 41 kommt. Beispielsweise ist die Metallisierung auf der ersten Stirnfläche 42a nur in Teilbereichen angeordnet. Beispielsweise befindet sich die Metallisierung lediglich in einem Bereich, der an eine Öffnung der jeweiligen Kammer 43 angrenzt. Zwischenbereiche (Trennstege) zwischen den Kammer 43 können zumindest teilweise frei von Metallisierung sein.

Ein Teilbereich des zweiten Abschnitts 41b der jeweiligen Einzelelektrode 41 (innere Stirnfläche des zweiten Abschnitts 41b) liegt auf der ersten Stirnfläche 42a, insbesondere dessen Metallisierung, des keramischen Körpers 42 auf. Die Einzelelektroden 41, insbesondere der Teilbereich des zweiten Abschnitts 41b der jeweiligen Einzelelektrode 41, sind auf der ersten Stirnfläche 42a mit dem keramischen Körper 42 verlötet, beispielsweise mittels Hartlot, zum Beispiel Ag₇₂Cu₂₈. Insbesondere ist eine gasdichte Verbindung zwischen den Einzelelektroden 41 und dem keramischen Körper 42 ausgebildet.

Ferner ist auch die Ableitelektrode 46 mit dem keramischen Körper 42, insbesondere der zweiten Stirnfläche 42b, verlötet, beispielsweise mittels Hartlot. Beim Anfügen der Ableitelektrode 46 und dem gasdichten Verlöten mit der Metallisierung wird der Gasableiter 40 abgedichtet.

Im Gasentladungsbereich ist an einer Innenseite des keramischen Körpers 42 (Innenbereich der jeweiligen Kammer 43) eine Zündungshilfe 47 (beispielsweise aus Graphit) vorgesehen, welche beim Ansprechen des Gasableiters 40 den Aufbau einer Entladung unterstützt.

Im Gasentladungsbereich ist ferner ein Aktivierungsmaterial 48, beispielsweise Silikate oder Alkalimetalle, angeordnet. Durch das Aktivierungsmaterial 48 kann die Ausbildung eines Lichtbogens unterstützt werden. Das Aktivierungselement 48 kann jeweils an einer Einzelelektrode 41 ausgebildet sein. Das Aktivierungsmaterial 48 kann in einem Endbereich der jeweiligen Einzelelektrode 41 ausgebildet sein. Dieser Endbereich ist im fertigen Gasableiter 40 in der jeweiligen Kammer 43 angeordnet. Der Endbereich ist in der Kamer 43 einem Endbereich des jeweiligen Kontaktelements 46a gegenüberliegend angeordnet.

Im Gegensatz zu der Figur 5 zeigt die Figur 6 ein Ausführungsbeispiel für eine Vorrichtung 50 zum Ableiten von Überspannungen (Gasableiter 50) mit acht Einzel- bzw. Adernelektroden 51. Der Gasableiter 50 ist damit für ein Datenübertragungssystem mit acht Leitern bzw. Adern, beispielsweise einem Gigabit Ethernet, ausgebildet. Selbstverständlich kann der Gasableiter 50 aber auch weniger als acht Einzelelektroden 51, beispielsweise sechs Einzelelektroden oder mehr als acht Einzelelektroden 51, beispielsweise zehn oder mehr Einzelelektroden, aufweisen.

Wie der in Figur 5 dargestellte Gasableiter 40 weist der Gasableiter 50 gemäß der Figur 6, der nicht Teil der Erfindung ist, eine gemeinsame Ableitelektrode 55 auf. In Aufsicht weist die Ableitelektrode 55 die Form eines "H" auf. Die Einzelelektroden 51 sind jeweils von zwei Seiten an einen horizontalen Steg des "H" herangeführt.
Zwischen den Elektroden 51, 55 ist ein gemeinsamer Gasentladungsbereich 53 ausgebildet. Eine Keramik bzw. ein keramischer Körper 52 dient der elektrischen Trennung der Einzelelektroden 51. Die beiden vertikalen Stege des "H" schließen den Gasentladungsbereich 53 ab und sind mit dem keramischen Körper 52 in ihren Endbereichen gasdicht verbunden.

Die Keramik 52 weist beispielsweise Al₂O₃ auf. Keramik 52 und Elektroden 51, 55 sind in diesem Ausführungsbeispiel eckig ausgeführt. Selbstverständlich ist auch eine andere Formgebung für die Keramik 52 und die Elektroden 51, 55 vorstellbar, beispielsweise eine runde Form. Die Keramik 52 weist Kammern oder Durchbrüche 56 auf. Die Kammern 56 durchdringen die Keramik 52 vollständig. Die Kammern 56 sind zur zumindest teilweisen Aufnahme der Einzelelektroden 51 ausgebildet. Die Kammern 56 sind durch die Einzelelektroden 51 gasdicht verschlossen. Vorzugsweise sind die Einzelelektroden 51 mit Innenwänden der Kammern 56 verlötet. Auf diese Weise wird der gemeinsame Gasentladungsbereich 53 ausgebildet.
Im Gasentladungsbereich 53 ist an einer Innenseite der Keramik 52 eine Zündungshilfe 57 (beispielsweise aus Graphit) vorgesehen, welche beim Ansprechen des Ableiters 50 den Aufbau einer Entladung unterstützt. Zwischen den Einzelelektroden 51 und der Ableitelektrode 55 ist ein Aktivierungsmaterial 54, beispielsweise Silikat oder Alkalimetall angeordnet. Beispielsweise kann das Aktivierungsmaterial 54 auf einer Oberfläche der jeweiligen Einzelelektrode 51 angeordnet sein, welche einer Oberfläche der Ableitelektrode 55 zugewandt ist.

Durch die oben beschriebene Anordnung einer Vielzahl von Einzelelektroden 51 mit einem gemeinsamen Gasentladungsbereich 53 kann beim bzw. durch das Zünden einer Strecke ein komplettes Zünden des Gasableiters 50 erreicht werden. Spannungsdifferenzen zwischen einzelnen Adern bzw. Aderpaaren können damit reduziert bzw. vermieden werden. Der Gasableiter 50 gemäß Figur 6 kann ferner gut gestapelt und verschlussgelötet werden.

Beide in den Figuren 5 und 6 dargestellte Gasableiter 40, 50 sind ferner vollständig automatisiert oberflächenmontierbar (SMD) ausgebildet. Durch diese Bauarbeit wird in erheblichem Maß Platz auf der Leiterplatte gespart. Auf diese Weise können sehr kostengünstige Leiterplatten gebaut werden.

Die Erfindung ist nicht durch die Beschreibung anhand der Ausführungsbeispiele beschränkt.

### Bezugszeichenliste

- 1: Ableiter
- 2: Elektrode
- 3: Außenelektrode
- 4: Zentrale Elektrode
- 5: Aktivierungsmaterial
- 6: Zündungshilfe
- 7: Entladungsbereich
- 8: Keramikkörper

- 10: Schaltbild
- 11: Elektronisches Gerät
- 12: Spannungsstoß
- 13: Ableiter
- 14: Entkoppler
- 15: Varistor
- 16: Unterdrückerdiode

- 20: Schaltbild
- 21: Ethernetport
- 22: LAN Chip
- 23: Ableiter
- 24: Primärschutz
- 25: Sekundärschutz
- 26: Transformator
- 27: Erde
- 28: Leiterpaar / Aderpaar
- 29: Leiter / Ader

- 30: Schaltbild
- 31: Ethernetport
- 32: LAN Chip
- 33: Ableiter
- 34: Primärschutz
- 35: Sekundärschutz
- 36: Transformator
- 37: Erde
- 38: Leiterpaar / Aderpaar
- 39: Leiter / Adern

- 40: Vorrichtung
- 41: Einzelelektrode
- 41a: Erster Abschnitt
- 41b: Zweiter Abschnitt
- 42: Keramischer Körper
- 42a: Erste Außenfläche / Erste Stirnfläche
- 42b: Zweite Außenfläche / Zweite Stirnfläche
- 43: Kammer
- 44: Trennsteg
- 45: Einschnitt / Gasentladungsbereich
- 46: Ableitelektrode
- 46a: Kontaktelement
- 47: Zündungshilfe
- 48: Aktivierungsmaterial
- h: Horizontale Richtung

- 50: Vorrichtung
- 51: Einzelelektrode
- 52: Keramik / keramischer Körper
- 53: Gasentladungsbereich
- 54: Aktivierungsmaterial
- 55: Ableitelektrode
- 56: Kammer
- 57: Zündungshilfe

## Patentansprüche

1. Gasableiter für Datenleitungssysteme, aufweisend:
- einen keramischen Körper (42),
- eine Vielzahl von Einzelelektroden (41) zum Anschluss an Datenleitungen, wobei die Einzelelektroden (41) jeweils einen pin- oder zylinderförmigen ersten Abschnitt (41a) aufweisen,
- eine den Einzelelektroden (41) gemeinsame Ableitelektrode (46), wobei ein gemeinsamer Gasentladungsbereich (45) zwischen den Einzelelektroden (41) und der Ableitelektrode (46) ausgebildet ist,
**dadurch gekennzeichnet,**
**dass** die Ableitelektrode (46) mit pin- oder zylinderförmigen Kontaktelementen (46a) versehen ist, wobei die ersten Abschnitte (41a) der Einzelelektroden (41) im Innern des keramischen Körpers (42) gegenüber den Kontaktelementen (46a) der Ableitelektrode (46) angeordnet sind.

2. Gasableiter nach Anspruch 1, bei dem
der keramische Körper (42) zur elektrischen Trennung der Einzelelektroden (41) ausgebildet ist.

3. Gasableiter nach Anspruch 1 oder 2, bei dem der keramische Körper (42) eine Anzahl von Kammern (43) aufweist, wobei die Anzahl der Kammern (43) der Anzahl von Einzelelektroden (41) entspricht, und
die Einzelelektroden (41) zumindest teilweise in den Kammern (43) angeordnet sind.

4. Gasableiter nach Anspruch 1 oder 2, bei dem die ersten Abschnitte (41a) der Einzelelektroden (41) und die Kontaktelemente (46a) der Ableitelektrode (46) in Kammern (43) des keramischen Körpers (42) angeordnet sind und
die Kammern (43) durch Trennstege (44) voneinander getrennt und durch Einschnitte (45) in den Trennstegen (44) so miteinander verbunden sind, dass ein Gasaustausch zwischen den Kammern (43) ermöglicht ist.

5. Gasableiter nach Anspruch 3 oder 4, bei dem die Kammern (43) den keramischen Körper (42) vollständig durchdringen.

6. Gasableiter nach einem der Ansprüche 3 bis 5, bei dem die Kammern (43) mit einem Gas gefüllt sind.

7. Gasableiter nach einem der Ansprüche 1 bis 6, bei dem die Ableitelektrode (46) gasdicht mit dem keramischen Körper (42) verbunden ist, und
der keramische Körper (42) zur elektrischen Trennung der Ableitelektrode (46) von den Einzelelektroden (41) zumindest teilweise zwischen der Ableitelektrode (46) und den Einzelelektroden (41) angeordnet ist.

8. Gasableiter nach einem der Ansprüche 1 bis 7, bei dem der keramische Körper (42) eine Metallisierung aufweist, und wobei die Einzelelektroden (41) über die Metallisierung gasdicht mit dem keramischen Körper (42) verbunden sind.

9. Gasableiter nach einem der Ansprüche 1 bis 8,
wobei der Gasableiter (40) wenigstens vier Einzelelektroden (41) aufweist.

10. Gasableiter nach einem der Ansprüche 1 bis 9, bei dem der keramische Körper (42) und/oder die Einzelelektroden (41) rechteckig ausgebildet sind.

11. Gasableiter nach einem der Ansprüche 1 bis 10, bei dem der keramische Körper (42) und/oder die Einzelelektroden (41) zylinderförmig ausgebildet sind.

12. Gasableiter nach einem der Ansprüche 1 bis 11, bei dem der Gasableiter (40) dazu ausgebildet ist, Spannungsdifferenzen zwischen Adern und Aderpaaren in Datenleitungssystemen mit >> 2 Leitungen zu verhindern.

13. Verwendung eines Gasableiters gemäß einem der Ansprüche 1 bis 12, wobei der Gasableiter (40) zum Abbau von Spannungsdifferenzen zwischen Adern oder Aderpaaren von Datenleitungssystemen mit >> 2 Leitungen eingesetzt wird.

14. Verwendung nach Anspruch 13,
wobei der Gasableiter (40) zum Überspannungsschutz von Ethernetports eingesetzt wird.

## Claims

1. Gas arrester for data line systems, comprising:
- a ceramic body (42),
- a plurality of individual electrodes (41) for connection to data lines, wherein the individual electrodes (41) each have a pin-shaped or cylindrical first section (41a),
- a discharge electrode (46) common to the individual electrodes (41), wherein a common gas discharge region (45) is formed between the individual electrodes (41) and the discharge electrode (46),
**characterized**
**in that** the discharge electrode (46) is provided with pin-shaped or cylindrical contact elements (46a), wherein the first sections (41a) of the individual electrodes (41) are arranged inside the ceramic body (42) opposite the contact elements (46a) of the discharge electrode (46) .

2. Gas arrester according to Claim 1, wherein
the ceramic body (42) is designed to electrically isolate the individual electrodes (41).

3. Gas arrester according to Claim 1 or 2, wherein
the ceramic body (42) comprises a number of chambers (43), wherein the number of chambers (43) corresponds to the number of individual electrodes (41), and
the individual electrodes (41) are arranged at least partially in the chambers (43).

4. Gas arrester according to Claim 1 or 2, wherein
the first sections (41a) of the individual electrodes (41) and the contact elements (46a) of the discharge electrode (46) are arranged in chambers (43) of the ceramic body (42) and the chambers (43) are separated from one another by separating walls (44) and connected to one another by incisions (45) in the separating walls (44) such that a gas exchange is made possible between the chambers (43) .

5. Gas arrester according to Claim 3 or 4, wherein the chambers (43) fully penetrate through the ceramic body (42) .

6. Gas arrester according to one of Claims 3 to 5, wherein the chambers (43) are filled with a gas.

7. Gas arrester according to one of Claims 1 to 6, wherein the discharge electrode (46) is connected to the ceramic body (42) in a gastight manner, and
the ceramic body (42) is arranged at least partially between the discharge electrode (46) and the individual electrodes (41) in order to electrically isolate the discharge electrode (46) from the individual electrodes (41) .

8. Gas arrester according to one of Claims 1 to 7, wherein the ceramic body (42) has a metallization, and wherein the individual electrodes (41) are connected to the ceramic body (42) in a gastight manner via the metallization.

9. Gas arrester according to one of Claims 1 to 8, wherein the gas arrester (40) comprises at least four individual electrodes (41).

10. Gas arrester according to one of Claims 1 to 9, wherein the ceramic body (42) and/or the individual electrodes (41) are of rectangular form.

11. Gas arrester according to one of Claims 1 to 10, wherein the ceramic body (42) and/or the individual electrodes (41) are of cylindrical form.

12. Gas arrester according to one of Claims 1 to 11, wherein the gas arrester (40) is used to prevent voltage differences between cores and core pairs in data line systems with >> 2 lines.

13. Use of a gas arrester according to one of Claims 1 to 12, wherein the gas arrester (40) is employed for the decay of voltage differences between cores or core pairs of data line systems with >> 2 lines.

14. Use according to Claim 13,
wherein the gas arrester (40) is employed for the protection of Ethernet ports against overvoltages.

## Revendications

1. Parafoudre à gaz destiné à des systèmes de lignes de données, le parafoudre à gaz comprenant :
- un corps en céramique (42),
- une multitude d'électrodes individuelles (41) destinées à être raccordées à des lignes de données, les électrodes individuelles (41) comportant chacune une première portion (41a) en forme de broche ou de cylindre,
- une électrode de décharge (46) commune aux électrodes individuelles (41), une région de décharge de gaz commune (45) étant formée entre les électrodes individuelles (41) et l'électrode de décharge (46),
**caractérisé en ce que**
l'électrode de décharge (46) est pourvue d'éléments de contact (46a) en forme de broche ou de cylindre, les premières portions (41a) des électrodes individuelles (41) étant disposées à l'intérieur du corps en céramique (42) en face des éléments de contact (46a) de l'électrode de décharge (46).

2. Parafoudre à gaz selon la revendication 1, dans lequel le corps en céramique (42) est conçu pour séparer électriquement les électrodes individuelles (41) .

3. Parafoudre à gaz selon la revendication 1 ou 2, dans lequel le corps en céramique (42) comporte un certain nombre de chambres (43), le nombre de chambres (43) correspondant au nombre d'électrodes individuelles (41), et
les électrodes individuelles (41) sont au moins partiellement disposées dans les chambres (43).

4. Parafoudre à gaz selon la revendication 1 ou 2, dans lequel
les premières portions (41a) des électrodes individuelles (41) et les éléments de contact (46a) de l'électrode de décharge (46) sont disposés dans des chambres (43) du corps en céramique (42) et les chambres (43) sont séparées les unes des autres par des nervures de séparation (44) et sont reliées les unes aux autres par des incisions (45) ménagées dans les nervures de séparation (44) de façon à permettre un échange de gaz entre les chambres (43).

5. Parafoudre à gaz selon la revendication 3 ou 4, dans lequel les chambres (43) pénètrent complètement dans le corps en céramique (42).

6. Parafoudre à gaz selon l'une des revendications 3 à 5, dans lequel les chambres (43) sont remplies d'un gaz.

7. Parafoudre à gaz selon l'une des revendications 1 à 6, dans lequel l'électrode de décharge (46) est reliée au corps en céramique (42) de manière étanche aux gaz, et
le corps en céramique (42) destiné à séparer électriquement l'électrode de décharge (46) des électrodes individuelles (41) est au moins partiellement disposé entre l'électrode de décharge (46) et les électrodes individuelles (41).

8. Parafoudre à gaz selon l'une des revendications 1 à 7, dans lequel le corps en céramique (42) comporte une métallisation, et les électrodes individuelles (41) étant reliées au corps en céramique (42) de manière étanche aux gaz par le biais de la métallisation.

9. Parafoudre à gaz selon l'une des revendications 1 à 8, le parafoudre à gaz (40) comportant au moins quatre électrodes individuelles (41).

10. Parafoudre à gaz selon l'une des revendications 1 à 9, dans lequel le corps en céramique (42) et/ou les électrodes individuelles (41) sont rectangulaires.

11. Parafoudre à gaz selon l'une des revendications 1 à 10, dans lequel le corps en céramique (42) et/ou les électrodes individuelles (41) sont de forme cylindrique.

12. Parafoudre à gaz selon l'une des revendications 1 à 11, le parafoudre à gaz (40) étant conçu pour éviter les différences de tension entre fils et paires de fils dans des systèmes de lignes de données à plus de 2 lignes.

13. Utilisation d'un parafoudre de gaz selon l'une des revendications 1 à 12, le parafoudre à gaz (40) étant utilisé pour réduire les différences de tension entre fils ou paires de fils de systèmes de lignes de données à plus de 2 lignes.

14. Utilisation selon la revendication 13,
le parafoudre à gaz (40) étant utilisé pour la protection contre les surtensions des ports Ethernet.
